# EUROPÄISCHE PATENTANMELDUNG

(11) **EP 0 707 989 A1**
(43) Veröffentlichungstag der Anmeldung: **24.04.1996**
(21) Anmeldenummer: 94116238.0
(22) Anmeldetag: 14.10.1994
(51) Int. Cl.: B60H 1/00, B60H 3/00

(54) **Vorrichtung zur Reinigung von Aussenluft**

(71) Anmelder: HS Technik und Design Technische Entwicklungen GmbH, D-82234 Wessling (DE)
(72) Erfinder: Hausrath, Udo, D-82319 Starnberg (DE); Meiler, Klaus, D-82343 Pöcking (DE)
(74) Vertreter: Nöth, Heinz, Dipl.-Phys.

(57) **Zusammenfassung**

Eine Reinigungsvorichtung 4, die in ein Kraftfahrzeug eingebaut ist und zur Reinigung der angesaugten Außenluft dient, wobei die gereinigte Luft durch Strömungswege 5 an die Umgebung wieder abgegeben wird und der Antrieb der Reinigungseinrichtung 4 durch Solarzellen 2, beispielsweise im Fahrzeugdach, mit elektrischer Energie versorgt wird.

## Beschreibung

Die Erfindung betrifft eine Vorrichtung zur Reinigung von Außenluft mit einem Gebläse und mehreren Reinigungsstufen im Strömungsweg der angesaugten Außenluft.

Eine derartige Vorrichtung ist aus der DE 43 18 738 C1 bekannt. Die bekannte Vorrichtung wird zur Reinigung der Außenluft bei Kraftfahrzeugen verwendet, wobei Filter und/oder Katalysatoren zum Einsatz kommen, die keinen für den Betrieb der Kraftfahrzeuge notwendigen Bestandteil darstellen und die angesaugte Außlenluft nach erfolgter Reinigung unmittelbar an die Umgebung der Kraftfahrzeuge abgeben.

Aufgabe der Erfindung ist es, eine Vorrichtung der eingangs genannten Art zu schaffen, die auch dann arbeitet, wenn die Energieversorgung nicht aus dem Drehantrieb des Kraftfahrzeugmotors abgeleitet werden kann.

Diese Aufgabe wird bei der eingangs genannten Vorrichtung erfindungsgemäß dadurch gelöst, daß an den elektrischen Antrieb des Gebläses Solarzellen als Energiequelle anschließbar sind.

Insbesondere bei stehendem Fahrzeug wird an Sonnentagen, an denen die Belastung der Außenluft in den Städten sehr hoch ist, eine Möglichkeit der Luftreinigung geschaffen, welche durch im Freien stehende Fahrzeuge erreicht wird.

Die von den Solarzellen erzeugte Energie kann auch in einem Zwischenspeicher, beispielsweise einem Akkumulator (Batterie), gespeichert werden und dann für den elektrischen Antrieb des Gebläses verwendet werden.

Bevorzugt kommt die Vorrichtung zur Reinigung von Außenluft bei Kraftfahrzeugen als Zusatzeinrichtung zur Anwendung, wobei die Solarzellen an einem außen liegenden Fahrzeugteil angeordnet sind, der der Sonneneinstrahlung ausgesetzt werden kann. Hierfür eignen sich besonders nach oben gerichtete Flächen, z.B. die Dachfläche, die Fläche des Kofferraumdeckels, die Motorhaube oder auch die Heckscheibe.

Bei Kraftfahrzeugen mit Schiebedach können die Solarzellen im Deckel des Schiebedaches angeordnet sein. Bei Bussen und sonstigen Nutzfahrzeugen können die Solarzellen im Deckel einer Notausstiegslinke angeordnet sein.

Die gereinigte Luft kann zu einem geringen Teil für die Innenbelüftung des Fahrzeugs verwendet werden. Sie wird jedoch größtenteils oder ganz auf Strömungswegen nach außen geleitet, die unabhängig von der Innenbelüftung sind.

Die Reinigungsvorrichtung besitzt bevorzugt mehrere Reinigungsstufen, wobei eine oder mehrere Reinigungsstufen zum Entfernen von Feststoffen aus der angesaugten Luft und eine oder mehrere Reinigungsstufen zur Beseitigung gasförmiger Verunreinigungen der Luft dienen.

Ferner ist bevorzugt eine Reinigungsstufe vorgesehen, in welcher Ozon in Sauerstoff umgewandelt wird. Als derartige Reinigungsstufe eignet sich ein Filtergewebe der Firma Hoechst mit eingebautem Granulat mit der Warenbezeichnung NOXON.

Anhand der Figuren wird die Erfindung noch näher erläutert. Es zeigt:
- Fig. 1:: ein Kraftfahrzeug mit einer Luftreinigungsvorrichtung zur Reinigung der Außenluft, die ein Ausführungsbeispiel der Erfindung ist; und
- Fig. 2:: in schematischer Darstellung den Aufbau des Ausführungsbeispiels der Erfindung.

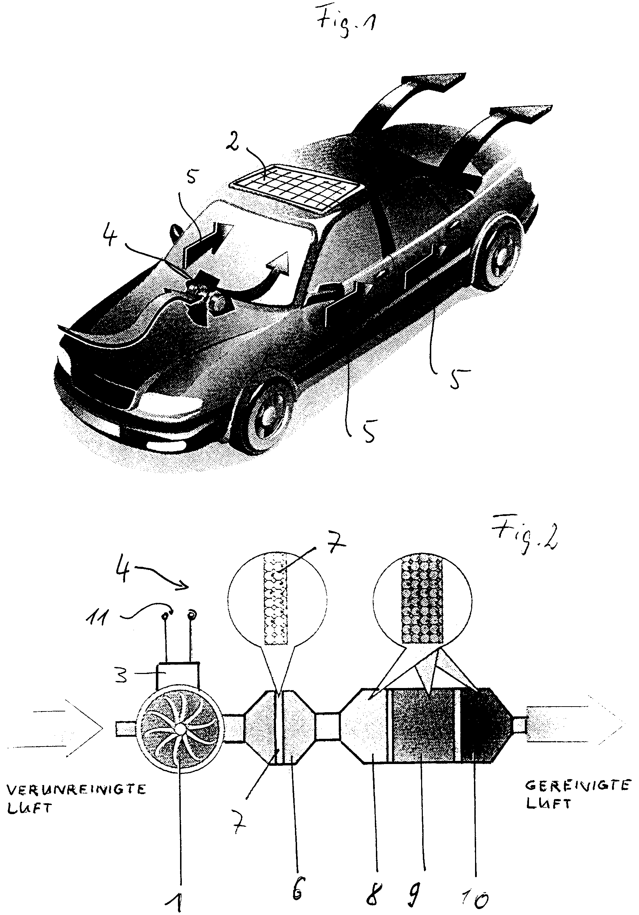

Das in Fig. 1 dargestellte Fahrzeug besitzt eine Reinigungsvorrichtung 4 zur Reinigung von Außenluft. Die Reinigungsvorrichtung 4 befindet sich bei dem dargestellten Fahrzeug an den Lufteinlaßöffnungen zwischen Motorhaube und Frontscheibe. Die Reinigungsvorrichtung kann auch an einem anderen geeigneten Platz am Fahrzeug untergebracht sein, wobei das Ansaugen der Außenluft bevorzugt an ohnehin am Fahrzeug vorgesehenen Lufteinlaßöffnungen erfolgt. Die Reinigungsvorrichtung besitzt, wie die Fig. 2 zeigt, ein Gebläse 1, das von einem elektrischen Antrieb 3, beispielsweise einen Elektromotor, angetrieben wird. Während des Fahrens des Fahrzeugs kann die Stromversorgung des elektrischen Antriebes 3 durch die Lichtmaschine oder einen anderen vom Motor des Fahrzeugs angetriebenen Generator erfolgen. Beim stehenden Fahrzeug, insbesondere wenn dieses von der Sonne beschienen wird, erfolgt die Stromversorgung 3 durch Solarzellen 2, welche beim dargestellten Ausführungsbeispiel im Deckel eines Schiebedachs des Kraftfahrzeugs angeordnet sind. Die Stromversorgung des elektrischen Antriebs 3 beim stehenden Fahrzeug kann auch von einem Akkumulator erfolgen, der durch die von den Solarzellen 2 erzeugte elektrische Energie nachladbar ist. Klemmen 11 des elektrischen Antriebs 3 sind an den Stromversorger angeschlossen.

Dem Gebläse 1 sind in der Reinigungsvorrichtung 4 verschiedene Reinigungsstufen nachgeschaltet. Bei dem in der Fig. 2 dargestellten Ausführungsbeispiel ist dem Gebläse 1 eine erste Reinigungsstufe 6 nachgeschaltet, in welcher Feststoffe, wie partikelförmige Verunreinigungen, Ruß und andere Schwebeteilchen aus der angesaugten Luft entfernt werden. Hierzu kann die erste Reinigungsstufe 6 ein geeignetes Filtergewebe aufweisen. In die Reinigungsstufe 6 kann ferner Granulat mit der Warenbezeichnung NOXON eingelagert sein, welches Ozon in Sauerstoff umwandelt. Diese Reinigungsstufe ist mit 7 bezeichnet.

An die Reinigungsstufe 6 schließen sich weitere Reinigungsstufen 8, 9 und 10 an. In diesen Reinigungsstufen werden bevorzugt gasförmige Luftverunreinigungen entfernt. Diese Reinigungsstufen können Aktivkohle enthalten, wobei in die Aktivkohle jeweils Stoffe eingelagert sind, die mit den zu entfernenden Gasen chemisch reagieren.

Die gereinigte Luft wird über gesonderte Strömungswege 5, welche unabhängig von der Innenbelüftung des Fahrzeugs sind, geleitet und an entsprechenden Luftauslässen an die Umgebung abgegeben. Ein Teil der gereinigten Luft kann auch insbesondere während des Fahrbetriebes für die Innenraumbelüftung verwendet werden. Durch die Erfindung ist jedoch ferner eine Luftreinigung auch dann möglich, wenn die Fahrzeuge geparkt werden.

## Patentansprüche

1. Vorrichtung zur Reinigung von Außenluft mit einem Gebläse und mehreren Reinigungsstufen im Strömungsweg der zu reinigenden Luft,
dadurch **gekennzeichnet,**
daß zum elektrischen Antrieb (3) des Gebläses (1) Solarzellen (2) als Energiequelle vorgesehen sind.

2. Vorrichtung nach Anspruch 1, dadurch gekennzeichnet, daß sie an einem Kraftfahrzeug als Zusatzeinrichtung vorgesehen ist und daß die Solarzellen (2) an einem außen liegenden Fahrzeugteil angeordnet sind.

3. Vorrichtung nach Anspruch 1 oder 2, dadurch gekennzeichnet, daß die Solarzellen (2) an einer nach oben gerichteten Fläche des Fahrzeugs angeordnet sind.

4. Vorrichtung nach einem der Ansprüche 1 bis 3, dadurch gekennzeichnet, daß für die gereinigte Luft von der Innenbelüftung unabhängige Strömungswege (5) im Fahrzeug vorgesehen sind.

5. Vorrichtung nach einem der Ansprüche 1 bis 4, dadurch gekennzeichnet, daß die Reinigungsstufen Filter (6) zum Entfernen von Feststoffen aus der angesaugten Luft und Filter (8,9,10) zur Beseitigung gasförmiger Verunreinigungen aufweisen.

6. Vorrichtung nach einem der Ansprüche 1 bis 5, dadurch gekennzeichnet, daß ferner eine Reinigungsstufe (7) vorgesehen ist, in welcher Ozon in Sauerstoff umgewandelt wird.

7. Vorrichtung nach einem der Ansprüche 1 bis 6, dadurch gekennzeichnet, daß der elektrische Antrieb (3) des Gebläses (1) an einen Akkumulator angeschlossen ist, der durch den Solarzellenstrom nachladbar ist.
